# EUROPÄISCHE PATENTSCHRIFT

(11) **EP 1 851 567 B1**
(45) Veröffentlichungstag und Bekanntmachung des Hinweises auf die Patenterteilung: **20.10.2010**
(21) Anmeldenummer: 05826349.2
(22) Anmeldetag: 23.12.2005
(51) Int. Cl.: G01S 7/521, G01S 15/93

(54) **MODULARER ULTRASCHALLSENSOR**
MODULAR ULTRASONIC SENSOR
CAPTEUR ULTRASONORE MODULAIRE

(30) Priorität: 23.02.2005 DE 102005009620
(43) Veröffentlichungstag der Anmeldung: 07.11.2007
(73) Patentinhaber: Valeo Schalter und Sensoren GmbH, 74321 Bietigheim-Bissingen (DE)
(72) Erfinder: TRIEBL, Stefan, 75417 Mühlacker (DE); LILL, Anton, 74348 Lauffen (DE); EIDEL, Oliver, 71696 Möglingen (DE)
(74) Vertreter: Pothmann, Karsten
(86) Internationale Anmeldenummer: PCT/EP2005/013983
(87) Internationale Veröffentlichungsnummer: WO 2006/089583

(56) Entgegenhaltungen:
- DE-A1- 3 939 387
- DE-A1- 10 201 990
- DE-A1- 19 752 921
- DE-A1- 19 937 195
- US-B1- 6 532 193

## Beschreibung

Die Erfindung betrifft einen Ultraschallsensor wie er zum Beispiel als Ultraschalleinparkhilfe für Kraftfahrzeuge verwendet wird, mit den Merkmalen des Oberbegriffs des Anspruchs 1.

Ultraschallsensoren sind in mannigfaltigen Ausführungsformen bekannt. Sie dienen dazu, den Fahrer eines Kraftfahrzeugs zum Beispiel beim Einparken zu unterstützen, indem sie die Entfernung zu einem Hindernis messen. Hierfür besitzen die Ultraschallsensoren eine Ultraschallmembran, mit welcher Ultraschallsignale ausgesandt und wieder empfangen werden. Dieser Sensor sitzt zusammen mit einer die Elektronik aufweisenden Platine in einem Sensorgehäuse, welches zum Beispiel in der Stoßstange eines Fahrzeugs angeordnet ist. Das Sensorgehäuse besitzt eine Kupplung zur elektrischen Verbindung mit den Versorgungsleitungen und Datenleitungen des Fahrzeugs. Da unterschiedliche Fahrzeuge unterschiedliche Stecker an ihren Versorgungs- und Datenleitungen aufweisen, müssen die Ultraschallsensoren mit unterschiedlichen Gehäusen versehen sein, so dass sie mit den Leitungen verbunden werden können.

Aus der US-B1-6,532,193 und der DE-A1-39 39 387 sind Ultraschallsensoren bekannt, bei denen das Sensorgehäuse mit unterschiedlichen Kupplungsgehäusen kombinierbar ist. Die Verbindung ist jedoch kompliziert und maschinell nur schwer durchführbar.

Der Erfindung liegt die Aufgabe zugrunde, den Aufwand für unterschiedliche Gehäuse für die unterschiedlichen Fahrzeuge zu minimieren und die Montage zu vereinfachen. Diese Aufgabe wird erfindungsgemäß mit einem Ultraschallsensor gelöst, der die Merkmale des Anspruchs 1 aufweist.

Mit dem erfindungsgemäßen Ultraschallsensor wird also der wesentliche Vorteil erzielt, dass für alle Fahrzeugtypen das gleiche Sensorgehäuse verwendet werden kann und dieses Sensorgehäuse lediglich mit dem fahrzeugspezifischen Kupplungsgehäuse gekuppelt wird und dann das Sensorgehäuse und das spezielle Kupplungsgehäuse das Gehäuse für den Ultraschallsensor bildet. Es kann also für alle Fahrzeugtypen das gleiche Sensorgehäuse mit oder gleichen Bestückung verwendet werden, wobei dann lediglich vor dem Vergießen, das heißt vor dem Verschließen des Sensorgehäuses, das fahrzeugspezifische Kupplungsgehäuse mit dem spezielle Stecker an das Sensorgehäuse angekuppelt werden muss. Die Sensorgehäuse können daher in sehr hohen Stückzahlen und somit preiswert hergestellt werden.

Außerdem ist vorgesehen, dass das Sensorgehäuse eine im Wesentlichen hülsenförmige Gehäusewand aufweist, dass in der Gehäusewand eine randoffene Ausnehmung vorgesehen ist und dass in die Ausnehmung das Kupplungsgehäuse einsetzbar ist. Diese Ausgestaltung des Sensorgehäuses ermöglicht eine einfache und vor allem maschinelle Verbindung von Sensorgehäuse und Kupplungsgehäuse, indem dieses in die randoffene Ausnehmung eingeschoben und dadurch die Ausnehmung geschlossen wird. Das Kupplungsgehäuse ist somit seitlich an das Sensorgehäuse angesetzt, wobei der Stecker abhängig von der Art des Kupplungsgehäuses radial oder axial dabei sowohl nach oben als auch nach unten abragen kann. Außerdem kann die Kupplung als Stecker oder als Buchse ausgebildet sein.

Bei einer bevorzugten Variante weist der Rand der Ausnehmung einen U-förmigen Querschnitt auf, wobei auch die Ausnehmung selbst, die randoffen ausgeführt ist, U-förmig ist. Das Kupplungsgehäuse ist mit einem frei abragenden Kragen versehen, der auf der randoffenen Seite in die Ausnehmung und in den U-förmigen Querschnitt einschiebbar ist. Das freie Ende des Kragens wird also vom U-förmigen Rand umgriffen. Durch die Umgreifung des Kragens mittels des U-förmigen Randes wird sichergestellt, dass das Kupplungsgehäuse in radialer Richtung spielfrei am Sensorgehäuse sitzt. Außerdem ist das Kupplungsgehäuse in tangentialer Richtung fixiert.

Dadurch, dass der Kragen eine nach außen abragende Rastnase aufweist, die in eine im Nutgrund des U-förmigen Randes vorgesehene Rastöffnung einrastet, wenn das Kupplungsgehäuse vollständig mit dem Sensorgehäuse gekuppelt ist, wird auch eine Fixierung in axialer Richtung erreicht, das heißt ein Auszug beziehungsweise Abzug des Kupplungsgehäuses vom Sensorgehäuse verhindert.

Die elektrische Kontaktierung erfolgt dadurch, dass das Kupplungsgehäuse in Einschubrichtung sich erstreckende Steckerpins aufweist, die beim Einsetzen des Kupplungsgehäuses in das Sensorgehäuse in die Platine eingepresst werden. Der Einpressvorgang erfolgt also gleichzeitig mit dem Einschieben beziehungsweise Kuppeln des Kupplungsgehäuses mit dem Sensorgehäuse. Auf eine spezielle Verlötung der Steckerpins mit der Platine kann verzichtet werden.

Im Gegensatz zu herkömmlichen Gehäusen für Ultraschallsensoren sind die Steckerpins von der der Ultraschallmembran abgewandten Seite in die Platine eingepresst. Hierdurch wird der wesentliche Vorteil erzielt, dass kein Bauraum benötigt wird, um die Steckpins von der der Ultraschallmembran zugewandten Seite der Platine umzulenken auf die rückwärtige Seite der Platine, was bei herkömmlichen Gehäusen der Fall ist.

Ein weiterer Vorteil wird darin gesehen, dass dieser frei gewordene Bauraum dazu verwendet wird, um die EMV-empfindlichen Bauteile auf der der Ultraschallmembran zugewandten Seite auf der Platine anzuordnen. Die EMV-empfindlichen Bauteile werden also auf der einen Seite von der Ultraschallmembran und auf der anderen Seite von der Platine flankiert und befinden sich in geschützterer Umgebung, als wenn sie auf der der Ultraschallmembran abgewandten Seite der Platine angeordnet wären. Es erübrigt sich somit ein die EMV-empfindlichen Bauteile übergreifender Abschirmkäfig.

Eine weitere Abschirmung dieser EMV-empfindlichen Bauteile kann dadurch erzielt werden, dass das Sensorgehäuse aus einem elektrisch leitfähigen Material, insbesondere aus Kunststoff, besteht. Dieser Kunststoff wurde speziell durch Zugabe von Karbon oder anderen leitfähigen Materialien elektrisch leitfähig gemacht, und dient zusätzlich als Abschirmkäfig für die EMV-empfindlichen Bauteile.

Im Gegensatz hierzu besteht das Kupplungsgehäuse aus einem elektrisch nicht leitfähigen Material, insbesondere aus Kunststoff. Somit können die einzelnen Steckerpins problemlos im Kupplungsgehäuse geführt werden, ohne dass sie einer elektrischen Isolierung bedürfen. Das Sensorgehäuse und das Kupplungsgehäuse bestehen demnach aus unterschiedlichen Materialien.

Mit Vorzug weist die Ultraschallmembran einen Massepin und einen Signalpin auf, wobei der Massepin direkt und der Signalpin elektrisch isoliert am Sensorgehäuse abgestützt ist. Durch die Abstützung des Pins wird dieser im Gehäuse stabilisiert und es kann die Platine auf die Pins aufgepresst werden. Dadurch erübrigt sich eine Verlötung der Pins der Ultraschallmembran mit der Platine.

Nach dem Aufpressen der Platine auf die Pins der Ultraschallmembran und nach dem Einschieben des Kupplungsgehäuses in das Sensorgehäuse und Verpressen der Steckerpins mit der Platine wird der Innenraum des Sensorgehäuses vergossen und dadurch hermetisch abgedichtet. Das Gehäuse weist nun den fahrzeugspezifischen Stecker auf.

Weitere Vorteile, Merkmale und Einzelheiten der Erfindung ergeben sich aus den Unteransprüchen sowie der nachfolgenden Beschreibung, in der unter Bezugnahme auf die Zeichnung Ausführungsbeispiele beschrieben sind. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: eine perspektivische Ansicht eines Ultraschallsensors, teilweise aufgeschnitten;
- Figur 2: eine perspektivische Ansicht eines Sensorgehäuses sowie diverse Kupplungsgehäuse; und
- Figur 3: eine Ansicht auf die Innenseite des Sensorgehäuses mit daran befestigten Pins der Ultraschallmembran.

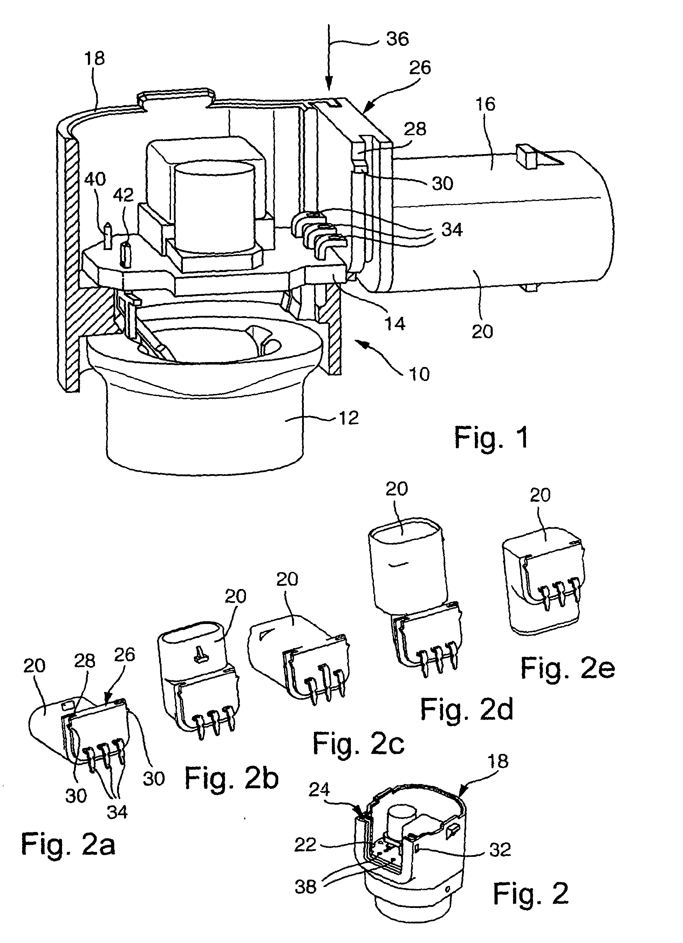

In der Figur 1 ist mit dem Bezugszeichen 10 ein Ultraschallsensor bezeichnet, in welchem eine Ultraschallmembran 12 und eine Platine 14 angeordnet sind und von welchem ein Stecker 16 abragt. Der Ultraschallsensor 10 wird von einem Sensorgehäuse 18 und einem Kupplungsgehäuse 20 gebildet, die ineinander gesteckt sind. Hierfür weist das Sensorgehäuse 18, wie aus Figur 2 ersichtlich, eine Ausnehmung 22 auf, deren Rand 24 einen U-förmigen Querschnitt aufweist. Außerdem ist die Ausnehmung 22 randoffen und ihrerseits ebenfalls U-förmig.

In der Figur 2 sind fünf Varianten 2a) bis 2e) von Kupplungsgehäusen 20 dargestellt, wobei die Variante a) auch in der Figur 1 gezeigt ist. Das Kupplungsgehäuse 20 besitzt einen Kupplungsteil 26, der mit einem umlaufenden, frei abragenden Kragen 28 versehen ist, welcher so ausgestaltet ist, dass er in den U-förmigen Rand 24 passt. Der Kragen 28 besitzt seitlich abragende Rastnasen 30, die bei am Sensorgehäuse 18 gekuppeltem Kupplungsgehäuse 20 in Rastöffnungen 32 am Rand 24 einrasten.

Aus den Figuren 1 und 2 ist außerdem erkennbar, dass vom Kupplungsteil 26 Steckerpins 34 in Einschubrichtung 36 abragen, wobei die im Sensorgehäuse 18 angeordnete Platine 14 Aufnahmeöffnungen 38 für die Steckerpins 34 aufweist. Wird das Kupplungsgehäuse 20 in das Sensorgehäuse 18 eingeschoben, dann werden die Steckerpins 34 in diese Aufnahmeöffnungen 38 von oben, das heißt in Richtung der Einschubrichtung 36, eingepresst. Einer Verlötung bedarf es demnach nicht mehr.

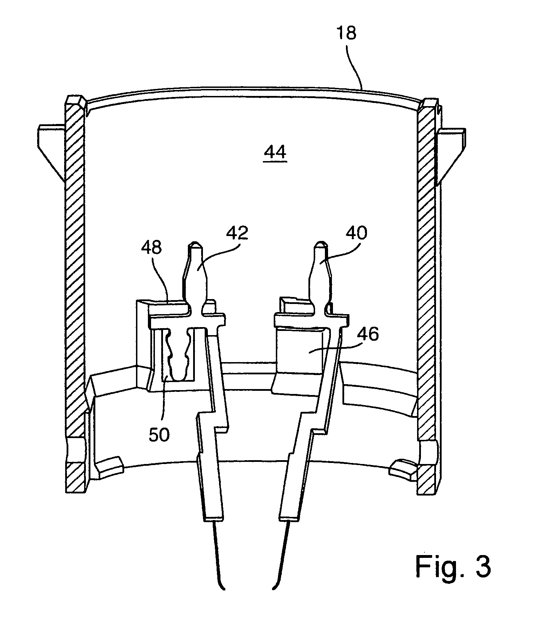

Außerdem ist aus Figur 1 erkennbar, dass die Ultraschallmembran 12 mit einem Massepin 40 und einem Signalpin 42 verbunden ist, die entgegen der Einschubrichtung 36 lotfrei in die Platine 14 eingepresst sind. Die Figur 3 zeigt die Abstützung des Massepins 40 und des Signalpins 42 an der Innenwand 44 des Sensorgehäuses 18, wobei der Massepin 40 direkt in einem Sockel 46 gelagert ist, und der Signalpin 42 von einem Sockel 48 gehalten wird, der elektrisch isolierendes Material 50 aufweist, so dass der Signalpin 42 gegenüber dem Sensorgehäuse 18 elektrisch isoliert ist. Das Sensorgehäuse 18 kann demnach aus einem elektrisch leitenden Material bestehen, so dass über den Massepin 40 die Ultraschallmembran 12 geerdet ist und außerdem die Platine 14 und daran befestigte (in der Zeichnung nicht dargestellte) an der der Ultraschallmembran 12 zugewandten Seite vorgesehene EMV-empfindliche Bauteile abgeschirmt werden.

Das Sensorgehäuse 18 kann demnach mit unterschiedlichen Kupplungsgehäusen 20 versehen werden, wobei nach dem Ankuppeln des Kupplungsgehäuses 20 am Sensorgehäuse 18 der Innenraum ausgegossen wird. Das Ultraschallsensorgehäuse 10 ist demnach bei gleichbleibendem Sensorgehäuse 18 und allen darin sich befindenden Bauteilen lediglich durch Verwendung eines spezifischen Kupplungsgehäuses 20 an unterschiedliche Fahrzeugtypen angepasst.

## Patentansprüche

1. Ultraschallsensor (10), wie er zum Beispiel als Ultraschalleinparkhilfe für Kraftfahrzeuge verwendet wird, mit einem Sensorgehäuse (18), in welchem ein Ultraschallgenerator, eine Ultraschallmembran (12) und gegebenenfalls eine Platine (14) mit der erforderlichen Elektronik untergebracht sind, und mit einer Kupplung für die elektrische Steckverbindung, wobei die Kupplung an einem separaten Kupplungsgehäuse (20) vorgesehen ist und das Sensorgehäuse (18) mit unterschiedlichen Kupplungsgehäusen (20) kombinierbar ist, **dadurch gekennzeichnet, dass** das Sensorgehäuse (18) eine im Wesentlichen hülsenförmige Gehäusewand aufweist, dass in der Gehäusewand eine randoffene Ausnehmung (22) vorgesehen ist und dass in die Ausnehmung (22) das Kupplungsgehäuse (20) einsetzbar ist.

2. Ultraschallsensor nach Anspruch 1, **dadurch gekennzeichnet, dass** der Rand (24) der Ausnehmung (22) einen U-förmigen Querschnitt aufweiset und das Kupplungsgehäuse (20) mit einem freien Kragen (28) versehen ist, der in den U-förmigen Rand (24) einschiebbar ist.

3. Ultraschallsensor nach Anspruch 2, **dadurch gekennzeichnet, dass** der Kragen (28) eine nach außen abragende Rastnase (30) aufweist, die in eine im Nutgrund des U-förmigen Randes (24) vorgesehene Rastöffnung (32) einrastet, wenn das Kupplungsgehäuse (20) vollständig mit dem Sensorgehäuse (18) gekuppelt ist.

4. Ultraschallsensor nach einem der vorhergehenden Ansprüche, **dadurch gekennzeichnet, dass** das Kupplungsgehäuse (20) in Einschubrichtung sich
erstreckende Steckpins (34) aufweist, die beim Einsetzen des Kupplungsgehäuses (20) in das Sensorgehäuse (18) in eine Platine (14) eingepresst werden.

5. Ultraschallsensor nach Anspruch 4, **dadurch gekennzeichnet, dass** die Steckerpins (34) von der der Ultraschallmembran (12) abgewandten Seite in die Platine (14) eingepresst sind.

6. Ultraschallsensor nach einem der vorhergehenden Ansprüche, **dadurch gekennzeichnet, dass** die EMV-empfindlichen Bauteile auf der der Ultraschallmembran (12) zugewandten Seite auf einer Platine (14) angeordnet sind.

7. Ultraschallsensor nach einem der vorhergehenden Ansprüche, **dadurch gekennzeichnet, dass** das Sensorgehäuse (18) aus einem elektrisch leitfähigen Material, insbesondere elektrisch leitfähigem Kunststoff, besteht.

8. Ultraschallsensor nach einem der vorhergehende Ansprüche, **dadurch gekennzeichnet, dass** das Kupplungsgehäuse (20) aus einem elektrisch nicht leitfähigen Material, insbesondere Kunststoff, besteht.

9. Ultraschallsensor nach einem der vorhergehenden Ansprüche, **dadurch gekennzeichnet, dass** die Ultraschallmembran (12) einen Massepin (40) und einen Signalpin (42) aufweist, dass der Massepin (40) direkt
und der Signalpin (42) elektrisch isoliert am Sensorgehäuse (18) abgestützt sind.

10. Ultraschallsensor nach Anspruch 9, **dadurch gekennzeichnet, dass** der Massepin (40) und der Signalpin (42) von der der Ultraschallmembran (12) zugewandten Seite in eine Platine (14) eingepresst sind.

11. Ultraschallsensor nach einem der vorhergehenden Ansprüche, **dadurch gekennzeichnet, dass** der Innenraum des Sensorgehäuses (18) nach dem Ankuppeln des Kupplungsgehäuses (20) vergossen ist.

## Claims

1. Ultrasonic sensor (10), as is used, for example, as an ultrasonic parking aid for motor vehicles, having a sensor housing (18) which accommodates an ultrasonic generator, an ultrasonic membrane (12) and possibly a printed circuit board (14) with the required electronics, and having a coupling for the electrical plug connection, the coupling being provided on a separate coupling housing (20), and the sensor housing (18) being able to be combined with different coupling housings (20), **characterized in that** the sensor housing (18) has an essentially sleeve-shaped housing wall, **in that** a recess (22) having an open edge is provided in the housing wall, and **in that** the coupling housing (20) can be inserted into the recess (22).

2. Ultrasonic sensor according to Claim 1, **characterized in that** the edge (24) of the recess (22) has a U-shaped cross section, and the coupling housing (20) is provided with a free collar (28) which can be inserted into the U-shaped edge (24).

3. Ultrasonic sensor according to Claim 2, **characterized in that** the collar (28) has an outwardly projecting latching lug (30) which latches in a latching opening (32) provided in the groove base of the U-shaped edge (24) when the coupling housing (20) is completely coupled to the sensor housing (18).

4. Ultrasonic sensor according to one of the preceding claims, **characterized in that** the coupling housing (20) has connector pins (34) which extend in the insertion direction and are pressed into a printed circuit board (14) when the coupling housing (20) is being inserted into the sensor housing (18).

5. Ultrasonic sensor according to Claim 4, **characterized in that** the connector pins (34) are pressed into the printed circuit board (14) from the side facing away from the ultrasonic membrane (12).

6. Ultrasonic sensor according to one of the preceding claims, **characterized in that** the EMC-sensitive components are arranged on a printed circuit board (14) on the side facing the ultrasonic membrane (12).

7. Ultrasonic sensor according to one of the preceding claims, **characterized in that** the sensor housing (18) consists of an electrically conductive material, in particular electrically conductive plastic.

8. Ultrasonic sensor according to one of the preceding claims, **characterized in that** the coupling housing (20) consists of an electrically non-conductive material, in particular plastic.

9. Ultrasonic sensor according to one of the preceding claims, **characterized in that** the ultrasonic membrane (12) has an earth pin (40) and a signal pin (42), **in that** the earth pin (40) is directly supported on the sensor housing (18) and the signal pin (42) is supported on the sensor housing (18) in an electrically insulated manner.

10. Ultrasonic sensor according to Claim 9, **characterized in that** the earth pin (40) and the signal pin (42) are pressed into a printed circuit board (14) from the side facing the ultrasonic membrane (12).

11. Ultrasonic sensor according to one of the preceding claims, **characterized in that** the interior of the sensor housing (18) is moulded after coupling the coupling housing (20).

## Revendications

1. Capteur d'ultrasons (10), comme celui qui est utilisé par exemple comme aide au stationnement pour des véhicules automobiles, comprenant un boîtier de capteur (18), dans lequel sont logés un générateur d'ultrasons, une membrane ultrason (12) et éventuellement une platine (14) avec l'électronique requise, et un accouplement pour la connexion par fiche électrique, l'accouplement étant prévu sur un boîtier d'accouplement (20) séparé et le boîtier de capteur (18) pouvant être combiné avec différents boîtiers d'accouplement (20), **caractérisé en ce que** le boîtier de capteur (18) présente une paroi de boîtier sensiblement en forme de manchon, **en ce qu'**un évidement (22) ouvert sur le bord est prévu dans la paroi de boîtier et **en ce que** le boîtier d'accouplement (20) peut être inséré dans l'évidement (22).

2. Capteur d'ultrasons selon la revendication 1, **caractérisé en ce que** le bord (24) de l'évidement (22) présente une section transversale en forme de U et le boîtier d'accouplement (20) est doté d'une collerette (28) libre qui peut être introduite dans le bord (24) en forme de U.

3. Capteur d'ultrasons selon la revendication 2, **caractérisé en ce que** la collerette (28) présente un ergot d'encliquetage (30) débordant vers l'extérieur, qui s'enclenche dans une ouverture d'encliquetage (32) prévue dans le fond de rainure du bord en forme de U (24), lorsque le boîtier d'accouplement (20) est accouplé complètement avec le boîtier de capteur (18).

4. Capteur d'ultrasons selon l'une quelconque des revendications précédentes, **caractérisé en ce que** le boîtier d'accouplement (20) présente des broches enfichables (34) s'étendant dans le sens d'introduction, lesquelles sont enfoncées dans le boîtier de capteur (18) dans une platine (14) lors de l'insertion du boîtier d'accouplement (20).

5. Capteur d'ultrasons selon la revendication 4, **caractérisé en ce que** les broches de connecteur (34) sont enfoncées dans la platine (14) à partir du côté opposé à la membrane ultrason (12).

6. Capteur d'ultrasons selon l'une quelconque des revendications précédentes, **caractérisé en ce que** les composants sensibles au niveau de la compatibilité électromagnétique sont disposés sur le côté tourné vers la membrane ultrason (12) sur une platine (14).

7. Capteur d'ultrasons selon l'une quelconque des revendications précédentes, **caractérisé en ce que** le boîtier de capteur (18) est à base d'un matériau électroconducteur, en particulier à base de matière synthétique électroconductrice.

8. Capteur d'ultrasons selon l'une quelconque des revendications précédentes, **caractérisé en ce que** le boîtier d'accouplement (20) est à base d'un matériau non-conducteur électriquement, en particulier de la matière synthétique.

9. Capteur d'ultrasons selon l'une quelconque des revendications précédentes, **caractérisé en ce que** la membrane ultrason (12) présente une broche de masse (40) et une broche de signal (42), **en ce que** la broche de masse (40) est soutenue directement et la broche de signal (42) est soutenue de manière isolée électriquement sur le boîtier de capteur (18).

10. Capteur d'ultrasons selon la revendication 9, **caractérisé en ce que** la broche de masse (40) et la broche de signal (42) sont enfoncées dans une platine (14) à partir du côté tourné vers la membrane ultrason (12).

11. Capteur d'ultrasons selon l'une quelconque des revendications précédentes, **caractérisé en ce que** l'espace intérieur du boîtier de capteur (18) est scellé après l'accouplement du boîtier d'accouplement (20).
